# EUROPÄISCHE PATENTSCHRIFT

(11) **EP 2 807 524 B1**
(45) Veröffentlichungstag und Bekanntmachung des Hinweises auf die Patenterteilung: **22.08.2018**
(21) Anmeldenummer: 12705969.9
(22) Anmeldetag: 27.01.2012
(51) Int. Cl.: G05B 19/042

(54) **ANSCHLUSSMODUL FÜR FELDGERÄTE IM EXPLOSIONSGESCHÜTZTEN BEREICH**
CONNECTION MODULE FOR FIELD DEVICES IN AN EXPLOSION PROOF ENVIRONMENT
MODULE DE CONNEXION D'APPAREILS DE TERRAIN DANS UNE ZONE ANTIDEFLAGRANTE

(43) Veröffentlichungstag der Anmeldung: 03.12.2014
(73) Patentinhaber: Pepperl & Fuchs GmbH, 68307 Mannheim (DE)
(72) Erfinder: OETTLER, Matthias, 68307 Mannheim (DE)
(74) Vertreter: Schiffer, Axel Martin
(86) Internationale Anmeldenummer: PCT/EP2012/000364
(87) Internationale Veröffentlichungsnummer: WO 2013/110294

(56) Entgegenhaltungen:
- WO-A1-03/034564
- US-A- 3 845 356

## Beschreibung

Die vorliegende Erfindung betrifft ein Anschlussmodul für Feldgeräte im explosionsgeschützten Bereich nach dem Oberbegriff des Anspruchs 1.

Ein gattungsgemäßes Anschlussmodul weist folgende Bestandteile auf: ein Gehäuse mit einer Mehrzahl von steuerungsseitigen Anschlüssen zum Anschließen an mindestens ein Ein-/Ausgabemodul und feldseitige Anschlüsse zum Verbinden mit den Feldgeräten. Ein solches Anschlussmodul im explosionsgeschützten Bereich wird beispielsweise in der US 3,845,356 beschrieben. In der darin enthaltenen technischen Lehre sind verschiedene feldseitige und steuerungsseitige Anschlüsse für Ein-/Ausgabemodule beschrieben, wobei eine einzige steuerungsseitige Spannungsquelle vorgesehen ist.

In der Prozessautomatisierung ist es, insbesondere im Bereich "remote-I/O" aber auch in der Interfacetechnik, bisher üblich, für jeden Typ eines Feldgeräts, beispielsweise eines Sensors oder eines Aktors, ein typspezifisches Eingangs- und/oder Ausgangsmodul zur Verbindung mit einer Steuerung vorzusehen. Dieses Modul ist mit seinen Übertragereigenschaften auf die jeweilige Mess- oder Ansteuermethode, beispielsweise analog 4 bis 20 mA oder binär, und auch auf die Erfordernisse der jeweils gewünschten Schutzklasse zugeschnitten.

Deshalb ist eine große Anzahl von Modulvarianten notwendig und beim Verdrahten, also beim Anschließen der einzelnen Geräte ist man vergleichsweise wenig flexibel, weil die Module mit verschiedenen Arten von Versorgungen aufwendig verdrahtet und die Feldgeräte an die dazu passenden Module angeschlossen werden müssen. Diese Verdrahtungsarbeiten werden auch Rangieren genannt.

Über die in den Modulen verbauten Schutzwiderstände wird außerdem eine nicht unerhebliche Leistung erzeugt, die zu unerwünschter Erwärmung führen kann.

Stand der Technik sind also jeweils spezielle Ein-/Ausgabemodule mit eigensicheren Feldstromkreisen, die jeweils auf einen bestimmten Typ eines Feldgeräts abgestimmt sind und feste eigensichere Kennwerte haben. So gibt es zum Beispiel binäre Eingänge für Namur-Sensoren, analoge Eingänge für 4 bis 20 mA-Transmitter, analoge Ausgänge für Stellungsregler, binäre Ausgänge für Magnetventile usw. Die bisher bekannten eigensicheren Ein-/Ausgabekreise haben also eine feste unveränderliche Funktion.

Ein eigensicheres Anschlussmodul im explosionsgeschützten Bereich ist in der WO 03/034564 beschrieben. Zur Gewährleistung der Eigensicherheit einer Vielzahl verschalteter Feldstromkreise für verschiedene Feldgeräte ist eine Vielzahl von strombegrenzenden Widerständen vorgesehen.

Stand der Technik sind außerdem Anschlussmodule, in denen einfache Verdrahtungen ohne jedwede Art von weiterer Funktionalität durchgeführt sind.

Als eine **Aufgabe** der Erfindung kann erachtet werden, ein Anschlussmodul zu schaffen, mit dem die Bereitstellung von eigensicheren Versorgungen für Feldgeräte im explosionsgeschützten Bereich flexibler ist.

Diese Aufgabe wird durch das Anschlussmodul mit den Merkmalen des Anspruchs 1 gelöst.

Das Anschlussmodul der oben genannten Art ist erfindungsgemäß dadurch weitergebildet, dass zum Bereitstellen von eigensicheren Paaren von feldseitigen Anschlüssen mit unterschiedlichen Kennwerten in dem Gehäuse verschiedene Widerstände vorhanden sind, die im Gehäuse mit unterschiedlichen feldseitigen Anschlüssen und/oder steuerungsseitigen Anschlüssen festverdrahtet sind.

Bevorzugte Ausgestaltungen des erfindungsgemäßen Anschlussmoduls sind Gegenstand der abhängigen Ansprüche und werden außerdem im Folgenden, insbesondere im Zusammenhang mit den Figuren, erläutert.

Der Begriff eines Anschlusses ist für die vorliegende Beschreibung funktionell und prinzipiell weit auszulegen. Grundsätzlich ist unter einem Anschluss jede Art von elektrischer Kontaktierung zu verstehen. Insbesondere kann es sich bei dem Anschlussmodul um Anschlüsse handeln, die in irgendeiner Form von lösbarer Verbindungstechnik, insbesondere durch Steckverbindungen, gebildet ist.

Als ein erster Kerngedanke des erfindungsgemäßen Anschlussmoduls kann angesehen werden, in Abwandlung zum Stand der Technik in dem Anschlussmodul zusätzlich zu bloßen Verdrahtungen außerdem Widerstände oder Lastwiderstände zu integrieren, die zur Strom- oder Leistungsbegrenzung für eigensichere Ausgänge genutzt werden. Der zur Verfügung stehende Raum im Anschlussmodul kann auf diese Weise effektiv genutzt werden und jedenfalls ein Teil der bei der Strombegrenzung entstehenden Wärme kann unproblematisch in diesem Bereich deponiert werden.

Als wesentlicher Vorteil des erfindungsgemäßen Anschlussmoduls ist einerseits die erzielbare hohe Flexibilität im Hinblick auf das Bereitstellen von unterschiedlichen eigensicheren Anschlüssen und Versorgungen anzusehen. Außerdem ergeben sich Vorteile für die weiteren Komponenten, insbesondere die anzuschließenen Ein-/Ausgabemodule, in denen bisher notwendige Widerstände zur Strom- oder Leistungsbegrenzung geringer dimensioniert oder gegebenenfalls ganz entfallen können.

Die Flexibilität für das Anschließen von Feldgeräten und/oder Strom/Spannungsversorgungen kann bevorzugt dadurch erreicht werden, dass eine Mehrzahl von steuerungsseitigen Anschlüssen vorhanden ist zum Anschließen von mehreren Strom/Spannungsversorgungen und alternativ oder ergänzend dadurch, dass eine Mehrzahl von feldseitigen Anschlüssen vorhanden ist zum Bilden von mehreren eigensicheren Paaren von feldseitigen Anschlüssen.

Der für ein eigensicheres Paar von feldseitigen Anschlüssen insgesamt wirksame leistungsbegrenzende Widerstand kann dabei ganz oder vollständig in dem Gehäuse des erfindungsgemäßen Anschlussmoduls angeordnet sein.

Im Hinblick auf die konkrete Verschaltung der Widerstände im Anschlussmodul besteht prinzipiell Gestaltungsfreiheit. Bei einfach zu realisierenden Varianten, die gleichwohl eine große Flexibilität für unterschiedliche Anwendungen ermöglichen, ist zum Bereitstellen eines für ein eigensicheres Paar von feldseitigen Anschlüssen wirksamen leistungsbegrenzenden Widerstands in dem Gehäuse eine Mehrzahl von geeignet zusammengeschalteten Einzelwiderständen vorgesehen.

Beispielsweise kann eine Reihenschaltung von Widerständen vorhanden sein, wobei mehrere Abgriffe der Reihenschaltung mit steuerungsseitigen Anschlüssen und/oder feldseitigen Anschlüssen verbunden sind.

Bei einer weiteren besonders bevorzugten Variante des erfindungsgemäßen Anschlussmoduls ist der insgesamt wirksame leistungsbegrenzende Widerstand so dimensioniert, dass mehrere aktive Ein-/Ausgabemodule ohne Beeinträchtigung der Eigensicherheit parallel an das Anschlussmodul angeschlossen werden können. Hierdurch sind besonders betriebssichere Anordnungen möglich.

Für die konkrete Montage des Anschlussmoduls am Einsatzort ist es zweckmäßig und vorteilhaft, wenn Steckverbindungen, beispielsweise zum Verbinden mit einer Trägerplatine und/oder mit einem Ein-/Ausgabemodul vorhanden sind. Besonders bevorzugt sind außerdem Steckverbindungen für spezielle einfache Schaltungen vorhanden, die als Signalfestlegungsbox bezeichnet werden können, und mit welcher weitere Funktionalitäten des Anschlussmoduls, insbesondere der feldseitigen Ausgänge definiert und festgelegt werden können. Beispielsweise können in einer solchen Signalfestlegungsbox weitere Widerstände vorhanden sein, durch welche ein leistungsbegrenzender Widerstand für einen eigensicheren Ausgang ganz oder teilweise bereitgestellt wird.

Schließlich ermöglicht das erfindungsgemäße Anschlussmodul auch Ausgestaltungen, bei dem mehrere Feldgeräte gleichzeitig angeschlossen werden können.

Weitere Vorteile und Merkmale der vorliegenden Erfindung werden im Folgenden mit Bezug auf die Figuren erläutert.

Hierin zeigen:
- Fig. 1:: ein erstes Ausführungsbeispiel eines erfindungsgemäßen Anschlussmoduls und
- Fig. 2:: ein zweites Ausführungsbeispiel eines erfindungsgemäßen Anschlussmoduls.

Gleiche und gleichwirkende Bestandteile sind in den beiden Figuren in der Regel mit denselben Bezugszeichen versehen.

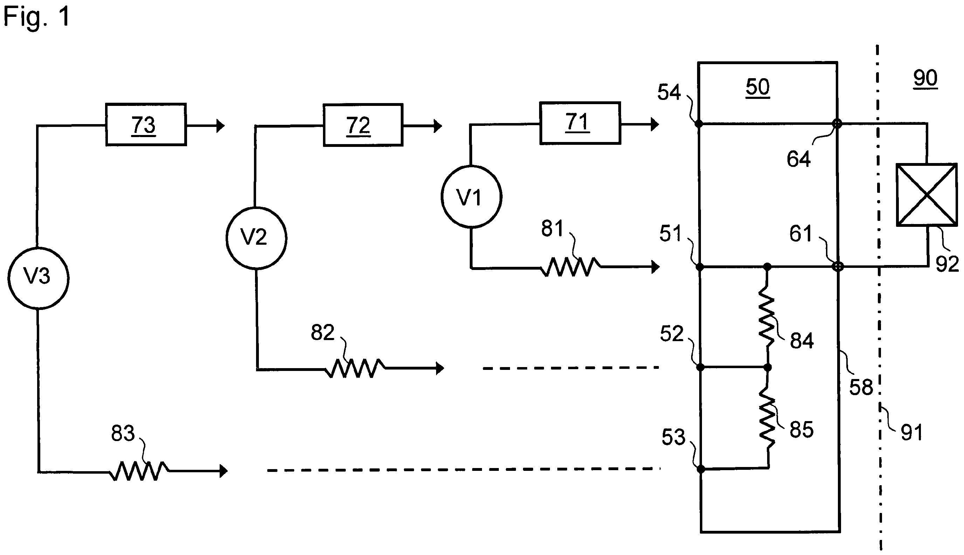

Ein erstes Ausführungsbeispiel eines erfindungsgemäßen Anschlussmoduls 50 wird mit Bezug auf Figur 1 erläutert. Das erfindungsgemäße Anschlussmodul 50 weist als wesentlichen Bestandteil ein Gehäuse 58 auf, an dem steuerungsseitige Anschlüsse 51, 52, 53, 54 und außerdem feldseitige Anschlüsse 61, 64 gebildet sind. Die steuerungsseitigen Anschlüsse 51, 52, 53, 54 dienen zum Anschließen von eigensicheren Spannungsversorgungen V1, 71, V2, 72, V3, 73, die in Figur 1 schematisch dargestellt sind und jeweils unterschiedliche Kennwerte aufweisen können. Als Teil eines insgesamt für die Strom- oder Leistungsbegrenzung wirksamen Widerstands sind jeweils Widerstände 81, 82, 83 vorgesehen, die im Hinblick auf die jeweils geforderten Kennwerte der Eigensicherheit angepasst sein können. Die feldseitigen Ausgänge 61, 64 dienen zum Anschließen von Feldgeräten 92 im explosionsgeschützten Bereich 90, dessen Begrenzung in Figur 1 durch eine vertikale gestrichelte Linie 91 angedeutet ist.

In dem Anschlussmodul 50 ist eine Reihenschaltung bestehend aus Widerständen 84, 85 vorhanden. Der Widerstand 85 ist zwischen den steuerungsseitigen Anschlüssen 52 und 53 geschaltet. Der Widerstand 84 ist zwischen den Anschlüssen 52 und 51 geschaltet. Anschluss 51 ist außerdem fest mit dem Anschluss 61 verdrahtet. Schließlich ist der Anschluss 54 im Gehäuse 58 auf den feldseitigen Anschluss 64 durchgeschaltet. Die Widerstände 84 und 85 sind im Hinblick auf die erforderlichen und gewünschten Kennwerte der Eigensicherheit geeignet gewählt.

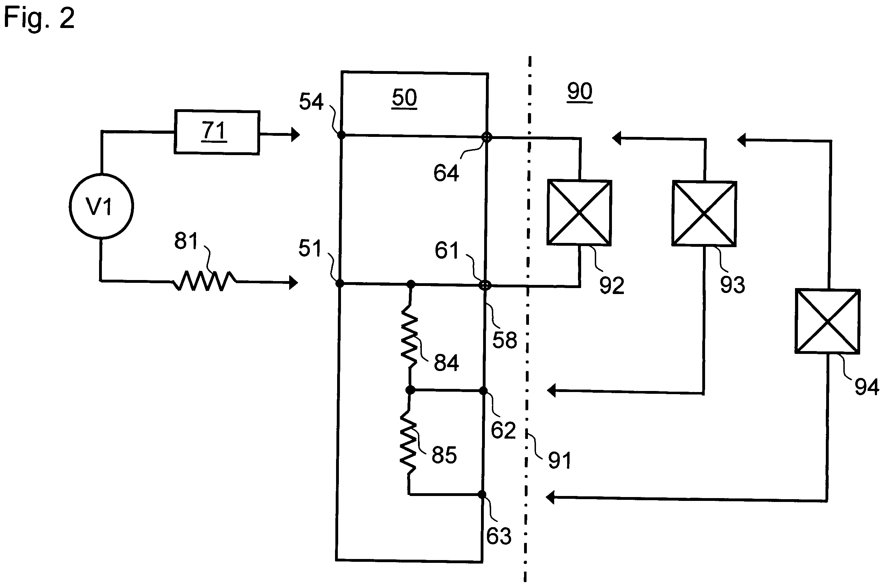

Das in Figur 2 dargestellte zweite Ausführungsbeispiel eines erfindungsgemäßen Anschlussmoduls 50 unterscheidet sich von der in Figur 1 dargestellten Variante im Wesentlichen dadurch, dass statt nur eines Paars von feldseitigen Anschlüssen 61, 64 weitere feldseitige Anschlüsse 62, 63 vorhanden sind. Das ermöglicht prinzipiell das Anschließen von Feldgeräten 92, 93, 94 im explosionsgeschützten Bereich in der in Figur 2 durch Pfeile angedeuteten Weise. Wie in Figur 1 ist im Gehäuse 58 des Anschlussmoduls 50 ein durch die Widerstände 84, 85 gebildeter Spannungsteiler vorhanden, wobei dessen erster Endpunkt mit dem feldseitigen Anschluss 63 und der zweite Endpunkt mit dem feldseitigen Anschluss 61 verbunden ist. Ein Abgriff zwischen den Widerständen 84, 85 ist mit dem feldseitigen Anschluss 62 verbunden. Wie in Figur 1 sind die Anschlüsse 61 und 51 einerseits und 64 und 54 andererseits jeweils miteinander leitend im Gehäuse 58 festverdrahtet verbunden. Steuerungsseitig ermöglicht das Anschlussmodul 50 aus Figur 2 die Verbindung mit einer Spannungsversorgung V1, 71.

In beiden Ausführungsbeispielen ist der insgesamt für die Strombegrenzung oder Leistungsbegrenzung wirksame Widerstand auf Einzelwiderstände aufgeteilt und wird durch die aus den Figuren ersichtliche Zusammenschaltung der Widerstände 81,..,85 erreicht.

Mit der vorliegenden Erfindung wird ein universell einsetzbares Anschlussmodul, das auch als universelle Terminalbase bezeichnet werden kann, beschrieben. Das erfindungsgemäße Anschlussmodul kann als Träger für ein Ein-/Ausgangsmodul oder mehrere Ein-/Ausgangsmodule dienen und weist eigensichere Anschlussmöglichkeiten für ein oder mehrere Feldgeräte auf. Das Anschlussmodul enthält mehrere Widerstände, die zur eigensicheren Strom- oder Leistungsbegrenzung wirksam sein können und die über Abgriffe auf Steckkontakte geführt sein können. In Abhängigkeit von den jeweils benutzten Kontakten oder Anschlüssen ist ein unterschiedlicher Widerstand für die Eigensicherheit wirksam. Dadurch kann das Ein-/Ausgangsmodul in Kombination mit dem erfindungsgemäßen Anschlussmodul verschiedene Kennwerte für die eigensicheren Anschlüsse einstellen, passend zu dem jeweils anzuschließenden Feldgerät im explosionsgeschützten Bereich.

Bei bisher üblichen Anordnungen ist der für die Eigensicherheit wirksame Widerstand wenigstens teilweise im Ein-/Ausgangsmodul integriert, dadurch ist jedoch ein redundanter Betriebsmodus ausgeschlossen, weil durch Stromaddition die Eigensicherheit verloren geht. In einer Abwandlung kann der für die Eigensicherheit wirksame Widerstand zwar zum überwiegenden Teil im Anschlussmodul untergebracht werden. Dann ist der Widerstand jedoch modulspezifisch zu wählen und das Anschlussmodul kann deshalb nicht mehr für verschiedene Ein-/Ausgabemodule universell eingesetzt werden.

Die wesentlichen Vorteile des erfindungsgemäßen Anschlussmoduls gegenüber bisherigen Lösungen, bei denen im Ein-/Ausgabemodul wenigstens teilweise der für die Eigensicherheit wirksame Widerstand angeordnet war, besteht im Wesentlichen in der geringeren Verlustleistung, also einer geringeren Erwärmung, im Ein-/Ausgabemodul. Außerdem ist ein redundanter Betrieb von Ein-/Ausgabemodulen möglich, ohne dass es zu einer Stromverdopplung kommt. Bei diesen Varianten können die fraglichen Ein-/Ausgabemodule einfach parallel geschaltet werden.

Bereitgestellt wird also ein universelles Anschlussmodul für Ein-/Ausgabemodule mit eigensicheren Ein-/Ausgabekreisen, bei dem eine Strombegrenzung mit Hilfe von mehreren Anschlüssen oder Kontakten auf einen bestimmten Grenzstrom selektierbar ist. Das Anschlussmodul kann eine Serienschaltung von Widerständen zur Strombegrenzung der eigensicheren Ein-/Ausgabekreise enthalten, wobei ein oder mehrere Abgriffe auf Steckkontakte oder sonstige in einer löslichen Verbindungstechnik ausgebildete Anschlüsse geführt sein können. Eine individuelle Strombegrenzung kann durch die Nutzung eines entsprechenden Widerstandsabgriffs erfolgen. Der für die Eigensicherheit insgesamt wirksame Widerstand kann sich ganz oder teilweise in dem erfindungsgemäßen Anschlussmodul befinden. In das erfindungsgemäße Anschlussmodul, das auch als Klemmenblock bezeichnet werden kann, werden Widerstände ausgelagert, mit deren Hilfe zusammen mit einer Zuführung der Spannungen und Ströme aus verschiedenen Quellen durch ein oder mehrere Ein-/Ausgabemodule eine passende Klemmenwahl mit einer Vielzahl von Wahlmöglichkeiten für unterschiedliche Ein-/Ausgabemodule möglich ist. Mit einer Signalfestlegungsbox, die auch als Signal-Designator bezeichnet werden kann, in der weitere ausgelagerte Widerstände angeordnet sind, lässt sich die Auswahl noch weitere spreizen. Prinzipiell wird durch das erfindungsgemäße Anschlussmodul, insbesondere zusammen mit einer Signalfestlegungsbox, eine Art Funktionskodierung vorgenommen.

## Patentansprüche

1. Anschlussmodul für Feldgeräte im explosionsgeschützten Bereich
mit einem Gehäuse (58) mit einer Mehrzahl von steuerungsseitigen Anschlüssen (51,..,54) zum Anschließen an mindestens ein Ein-/Ausgabemodul und
mit feldseitigen Anschlüssen (61,..,64) zum Verbinden mit den Feldgeräten (92, 93, 94),
wobei zum Bereitstellen von eigensicheren Paaren von feldseitigen Anschlüssen mit unterschiedlichen Kennwerten in dem Gehäuse (58) verschiedene Widerstände (84, 85) vorhanden sind, die im Gehäuse (58) mit unterschiedlichen feldseitigen Anschlüssen (61,..,64) und steuerungsseitigen Anschlüssen (51,..,54) fest verdrahtet sind,
**dadurch gekennzeichnet,**
**dass** in dem Gehäuse (58) mindestens eine Reihenschaltung von Widerständen vorhanden ist,
**dass** mehrere Abgriffe der Reihenschaltung mit steuerungsseitigen Anschlüssen (51,..,54) oder feldseitigen Anschlüssen (61,...,64) verbunden sind,
**dass** eine Mehrzahl von steuerungsseitigen Anschlüssen (51,..,54) vorhanden ist zum Anschließen von mehreren Strom/Spannungsversorgungen (V1, 71,..,V3, 73) und
**dass** eine Mehrzahl von feldseitigen Anschlüssen (61,..,64) vorhanden ist zum Bilden von mehreren eigensicheren Paaren von feldseitigen Anschlüssen, wobei in Abhängigkeit von jeweils benutzten Anschlüssen ein unterschiedlicher Widerstand für die Eigensicherheit wirksam ist.

2. Anschlussmodul nach Anspruch 1,
**dadurch gekennzeichnet,**
**dass** der für ein eigensicheres Paar von feldseitigen Anschlüssen (61,..,64) insgesamt wirksame leistungsbegrenzende Widerstand sich vollständig in dem Gehäuse (58) befindet.

3. Anschlussmodul nach Anspruch 1 oder 2,
**dadurch gekennzeichnet,**
**dass** sich der für ein eigensicheres Paar von feldseitigen Anschlüssen (61,..,64) insgesamt wirksame leistungsbegrenzende Widerstand sich teilweise in dem Gehäuse (58) befindet.

4. Anschlussmodul nach einem der Ansprüche 1 bis 3,
**dadurch gekennzeichnet,**
**dass** zum Bereitstellen eines für ein eigensicheres Paar von feldseitigen Anschlüssen (61,..,64) wirksamen leistungsbegrenzenden Widerstands in dem Gehäuse (58) mehrere Einzelwiderstände zusammengeschaltet sind.

5. Anschlussmodul nach einem der Anschlüsse 1 bis 4,
**dadurch gekennzeichnet,**
**dass** der für ein eigensicheres Paar von feldseitigen Anschlüssen (61,..,64) insgesamt wirksame leistungsbegrenzende Widerstand so dimensioniert ist, dass mehrere aktive Ein-/Ausgabemodule ohne Beeinträchtigung der Eigensicherheit parallel anschließbar sind.

6. Anschlussmodul nach einem der Ansprüche 1 bis 5,
**dadurch gekennzeichnet,**
**dass** Steckverbindungen zum Verbinden mit einer Trägerplatine vorhanden sind.

7. Anschlussmodul nach einem der Ansprüche 1 bis 6,
**dadurch gekennzeichnet,**
**dass** Steckverbindungen zum Verbinden mit mindestens einem Ein-/ Ausgabemodul vorhanden sind.

8. Anschlussmodul nach einem der Ansprüche 1 bis 7,
**dadurch gekennzeichnet,**
**dass** Steckverbindungen mit einer Signalfestlegungsbox vorhanden sind.

9. Anschlussmodul nach einem der Ansprüche 1 bis 8,
**dadurch gekennzeichnet,**
**dass** mehrere Feldgeräte (92, 93, 94) gleichzeitig anschließbar sind.

## Claims

1. Connection module for field devices in the explosion-protected area, having
a housing (58) with a plurality of control-end terminals (51, ..., 54) to connect to at least one input / output module and having field-end terminals (61, ..., 64) to connect to the field devices (92, 93, 94),
wherein, to provide intrinsically safe pairs of field-end terminals with different characteristic values, there are different resistors (84, 85) in the housing (58), which are hard-wired to different field-end terminals (61, ..., 64) and control-end terminals (51, ..., 54) in the housing (58),
**characterised in that**
there is at least one series connection of resistors in the housing (58),
a plurality of pick-ups of the series connection are connected to control-end terminals (51, ..., 54) or field-end terminals (61, ..., 64),
there are a plurality of control-end terminals (51, ..., 54) to connect a plurality of current / voltage supplies (V1, 71, ..., V3, 73), and
there are a plurality of field-end terminals (61, ..., 64) to form a plurality of intrinsically safe pairs of field-end terminals,
wherein a different resistance is effective for intrinsic safety in dependence upon respectively used terminals.

2. Connection module according to claim 1,
**characterised in that**
the total effective power-limiting resistance for an intrinsically safe pair of field-end terminals (61, ..., 64) is located completely in the housing (58).

3. Connection module according to claim 1 or 2,
**characterised in that**
the total effective power-limiting resistance for an intrinsically safe pair of field-end terminals (61, ..., 64) is located partially in the housing (58).

4. Connection module according to one of claims 1 to 3,
**characterised in that**,
to provide an effective power-limiting resistance for an intrinsically safe pair of field-end terminals (61, ..., 64), a plurality of individual resistors are interconned in the housing (58).

5. Connection module according to one of claims 1 to 4,
**characterised in that**
the total effective power-limiting resistance for an intrinsically safe pair of field-end terminals (61, ..., 64) is dimensioned so that a plurality of active input / output modules can be connected in parallel without impairing the intrinsic safety.

6. Connection module according to one of claims 1 to 5,
**characterised in that**
there are plug connectors for connection to a base board.

7. Connection module according to one of claims 1 to 6,
**characterised in that**
there are plug connectors for connection to at least one input / output module.

8. Connection module according to one of claims 1 to 7,
**characterised in that**
there are plug connectors with a signal-determining box.

9. Connection module according to one of claims 1 to 8,
**characterised in that**
a plurality of field devices (92, 93, 94) can be simultaneously connected.

## Revendications

1. Module de connexion d'appareils de terrain dans une zone antidéflagrante avec un boîtier (58) avec une pluralité de bornes côté commande (51,..,54) en vue d'une connexion à au moins un modèle d'entrée/sortie et avec des bornes côté terrain (61,..,64) en vue d'une liaison avec les appareils de terrain (92, 93, 94), dans lequel, pour la fourniture de paires de bornes côté terrain à sécurité intrinsèque avec différentes caractéristiques, différentes résistances (84, 85) sont présentes dans le boîtier (58), lesquelles sont câblées dans le boîtier (58) avec différentes bornes côté terrain (61,..,64) et bornes côté commande (51,..,54), **caractérisé en ce**
**qu'**au moins un montage en série de résistances est présent dans le boîtier (58), que plusieurs prises du montage en série sont reliées à des bornes côté commande (51,..,54) ou à des bornes côté terrain (61,...,64),
**qu'**une pluralité de bornes côté commande (51,..,54) est présente pour la connexion de plusieurs alimentations en courant/tension (V1, 71,..,V3, 73) et qu'une pluralité de bornes côté terrain (61,..,64) est présente pour la formation de plusieurs paires de bornes côté terrain à sécurité intrinsèque,
dans lequel, en fonction des bornes respectivement utilisées, une résistance différente est utilisée pour la sécurité intrinsèque.

2. Module de connexion selon la revendication 1,
**caractérisé en ce**
**que** la résistance de limitation de puissance globalement effective pour une paire de bornes côté terrain (61,..,64) à sécurité intrinsèque se trouve entièrement dans le boîtier (58).

3. Module de connexion selon la revendication 1 ou 2,
**caractérisé en ce**
**que** la résistance de limitation de puissance globalement effective pour une paire de bornes côté terrain (61,..,64) à sécurité intrinsèque se trouve partiellement dans le boîtier (58).

4. Module de connexion selon l'une des revendications 1 à 3,
**caractérisé en ce**
**que**, pour la fourniture d'une résistance de limitation de puissance effective pour une paire de bornes côté terrain (61,..,64) à sécurité intrinsèque, plusieurs résistances individuelles sont interconnectées dans le boîtier (58).

5. Module de connexion selon l'une des revendications 1 à 4,
**caractérisé en ce**
**que** la résistance de limitation de puissance globalement effective pour une paire intrinsèque de bornes côté terrain (61,..,64) est dimensionnée de telle sorte que plusieurs modules d'entrée/de sortie actifs peuvent être connectés en parallèle sans porter atteinte à la sécurité intrinsèque.

6. Module de connexion selon l'une des revendications 1 à 5,
**caractérisé en ce**
**que** des connecteurs sont présents en vue d'une liaison à une plaque de support.

7. Module de connexion selon l'une des revendications 1 à 6,
**caractérisé en ce**
**que** des connecteurs sont présents en vue d'une liaison à au moins un module d'entrée/de sortie.

8. Module de connexion selon l'une des revendications 1 à 7,
**caractérisé en ce**
**que** des connecteurs sont présents avec un boîtier de détermination de signal.

9. Module de connexion selon l'une des revendications 1 à 8,
**caractérisé en ce**
**que** plusieurs appareils de terrain (92, 93, 94) peuvent être connectés simultanément.
